# EUROPÄISCHE PATENTSCHRIFT

(11) **EP 1 452 832 B1**
(45) Veröffentlichungstag und Bekanntmachung des Hinweises auf die Patenterteilung: **24.10.2018**
(21) Anmeldenummer: 04100070.4
(22) Anmeldetag: 12.01.2004
(51) Int. Cl.: G01D 5/165, G01F 23/38

(54) **Magnetisch passiver Positions-Sensor, Verfahren zur Fertigung des magnetisch passiven Positions-Sensors**
Magnetically passive position sensor and method for producing the sensor
Capteur de position magnétiquement passif et procédé de fabrication du capteur

(30) Priorität: 28.02.2003 DE 10308958
(43) Veröffentlichungstag der Anmeldung: 01.09.2004
(73) Patentinhaber: Continental Automotive GmbH, 30165 Hannover (DE)
(72) Erfinder: Pauer, Bernd, 65817 Eppstein (DE)

(56) Entgegenhaltungen:
- EP-A- 0 895 068
- DE-A1- 19 648 539

## Beschreibung

Die Erfindung betrifft einen magnetisch passiven Positions-Sensor mit einem an einem Schwenkarm angeordneten Magneten, mit einer Vielzahl von im Schwenkbereich des Magneten angeordneten Kontaktfederelementen, wobei die Kontaktfederelemente einem Dickschichtnetzwerk gegenüberstehen und von dem Magneten gegen das Dickschichtnetzwerk bewegbar sind, wobei der Magnet um seine auf das Dickschichtnetzwerk gerichtete mechanische Achse unverdrehbar gehalten ist. Weiterhin betrifft die Erfindung ein Verfahren zur Herstellung eines magnetisch passiven Positions-Sensors, bei dem ein Magnet schwenkbar über einem Dickschichtnetzwerk gegenüberstehenden Kontaktfederelement angeordnet wird.

Magnetisch passive Positions-Sensoren werden bei Füllstandssensoren in Kraftstoffbehältern heutiger Kraftfahrzeuge häufig eingesetzt und sind aus der DE 196 48 539 A1 bekannt. Der Magnet ist zylindrisch gestaltet und in einer Bohrung des Schwenkarms gehalten. Mit einer Stirnseite steht der Magnet zumindest einem der Kontaktfederelemente gegenüber. Bei einer Bewegung des Schwenkarms und damit des Magneten über die Kontaktfederelemente werden entsprechend der Stellung des Magneten unterschiedliche Kontaktfederelemente gegen das Dickschichtnetzwerk gedrückt. Hierdurch lässt sich die Position des Magneten feststellen.

Nachteilig bei dem bekannten Positions-Sensor ist, dass die Position des Magneten an den Endstellungen seines Schwenkbereichs nur unzureichend bestimmbar ist. Dies führt beim Einsatz des magnetisch passiven Positions-Sensors als Füllstandssensor in Kraftstoffbehältern gerade dann zu Ungenauigkeiten, wenn der Kraftstoffbehälter nahezu leer ist und eine besonders hohe Genauigkeit gewünscht ist.
Der Erfindung liegt das Problem zugrunde, einen magnetisch passiven Positions-Sensor der eingangs genannten Art so zu gestalten, dass er eine besonders hohe Genauigkeit nahe der Endstellungen des Schwenkbereichs hat. Weiterhin soll ein Verfahren zur Herstellung eines Positions-Sensors mit einer besonders hohen Genauigkeit geschaffen werden.
Das erstgenannte Problem wird erfindungsgemäß dadurch gelöst, dass der Magnet mit seiner magnetischen Achse in eine vorgesehene Richtung ausgerichtet ist, derart, dass sowohl seine magnetische als auch seine mechanische Achse auf dasselbe Kontaktfederelement ausgerichtet sind, wobei der Magnet einen Führungsmehrkant aufweist, und dass eine Aufnahme des Schwenkarms für den Magneten dem Führungsmehrkant entsprechend gestaltet ist.
Durch diese Gestaltung wird ein Taumeln der magnetischen Achse um die mechanische Achse des Magneten verhindert. Damit erzeugt die magnetische Achse des Magneten jederzeit einen bestimmten Schwenkbereich über die Kontaktfederelemente. Wenn die magnetische Achse des Magneten von seiner mechanischen Achse abweicht, wird durch seine unverdrehbare Ausrichtung sichergestellt, dass beispielsweise in den Endbereichen jeweils dieselben Kontaktfederelemente gegen das Dickschichtnetzwerk bewegt werden. Hierdurch werden Ungenauigkeiten, welche durch einen Versatz der magnetischen Achse von der mechanischen Achse des Magneten und die Drehung des Magneten um die mechanische Achse erzeugt werden, beseitigt.
Der erfindungsgemäße Positions-Sensor weist in seinen Endbereichen eine besonders hohe Genauigkeit auf, weil zumindest eines der Kontaktfederelemente auf einer Verbindung einer magnetischen Achse und einer mechanischen Achse des Magneten angeordnet ist. Bei einer Abweichung der magnetischen Achse von der mechanischen Achse des Magneten sind beide Achsen auf dasselbe Kontaktfederelement ausgerichtet. Zudem weist die magnetische Achse auf das
nächstliegende Kontaktelement und vermag damit eine besonders hohe magnetische Feldstärke in dem betreffenden Kontaktfederelement zu induzieren.
Die Montage des Magneten in der vorgesehenen Position erfordert einen besonders geringen Aufwand, wenn der Magnet einen Führungsmehrkant aufweist und wenn eine Aufnahme des Schwenkarms für den Magneten dem Führungsmehrkant entsprechend gestaltet ist. Der Führungsmehrkant kann dabei wahlweise eine Ausnehmung oder ein Vorsprung sein.
Das zweitgenannte Problem, nämlich die Schaffung eines Verfahrens zur Herstellung eines magnetisch passiven Positions-Sensors mit einer besonders hohen Genauigkeit, wird erfindungsgemäß dadurch gelöst, dass eine magnetische Achse des Magneten bestimmt wird und der Magnet so in Richtung der Kontaktfederelemente ausgerichtet wird, dass sowohl seine magnetische als auch seine mechanische Achse auf dasselbe Kontaktfederelement ausgerichtet sind.
Durch diese Gestaltung wird sichergestellt, dass die magnetische Achse des Magneten gegenüber den Kontaktfederelementen derart ausgerichtet ist, dass insbesondere in den Endbereichen des Schwenkbereiches die vorgesehenen Kontaktfederelemente gegen das Dickschichtnetzwerk bewegt werden. Eine weitere Justierung des Positions-Sensors ist dank der Erfindung nicht erforderlich. Bei länglichen Magneten erfolgt die erfindungsgemäße Bestimmung und Ausrichtung des Magneten derart, dass zunächst eine magnetische Achse des Magneten gegenüber seiner mechanischen Achse bestimmt wird und dass anschließend der Magnet gegenüber dem nächsten der Kontaktfederelemente derart ausgerichtet wird, dass sowohl die magnetische Achse als auch die mechanische Achse auf ein gemeinsames Kontaktfederelement gerichtet sind.

Die Magnete lassen sich mit geringem Aufwand für die Montage im Schwenkarm vorbereiten, wenn nach der Bestimmung der Ausrichtung der magnetischen Achse ein Führungsmehrkant in den Magneten eingearbeitet wird. Anschließend lassen sich die Magnete einfach in eine entsprechend gestaltete Aufnahme des Schwenkarms einsetzen.

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in
- Fig.1: eine Schnittdarstellung durch einen erfindungsgemäßen Positions-Sensor,
- Fig.2: eine stark vergrößerte Darstellung des Positions-Sensors aus Figur 1 im Bereich eines Magneten,
- Fig.3: eine Schnittdarstellung durch den Positions-Sensor aus Figur 2 entlang der Linie III - III.

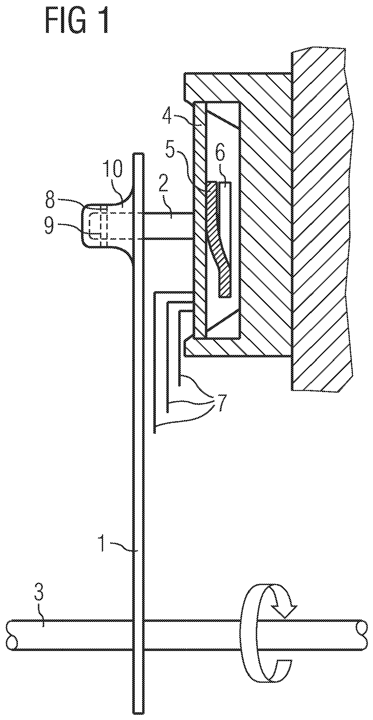

Figur 1 zeigt einen Positions-Sensor mit einem auf einem Schwenkarm 1 angeordneten Magneten 2. Der Schwenkarm 1 ist auf einer Drehachse 3 befestigt. Die Drehachse 3 lässt sich beispielsweise mit einem nicht dargestellten Schwimmer eines Füllstandssensors eines Kraftstoffbehälters eines Kraftfahrzeuges verbinden. Der Magnet 2 lässt sich über ein Dickschichtnetzwerk 4 verschwenken. Auf der dem Magneten 2 abgewandten Seite des Dickschichtnetzwerkes 4 sind magnetische Kontaktfederelemente 5, 6 angeordnet. Die Kontaktfederelemente 5, 6 lassen sich von dem Magneten 2 anziehen und gegen das Dickschichtnetzwerk 4 drücken. Das Dickschichtnetzwerk 4 ist über elektrische Leitungen 7 mit einer nicht dargestellten Elektronik verbunden, welche über die an dem Dickschichtnetzwerk 4 anliegenden Kontaktfederelemente 5, 6 die Stellung des Magneten 2 erfasst. Dieser Positions-Sensor ist in der DE 196 48 539 A1 ausführlich beschrieben, weshalb zur möglichen Beschreibung des Aufbaus und der Funktion ausdrücklich auf diese Schrift verwiesen wird.
Der Magnet 2 weist einen in der dem Dickschichtnetzwerk 4 abgewandten Stirnseite angeordneten Führungsmehrkant 8 auf, mit dem er in einem entsprechend gestalteten Vorsprung 9 einer Aufnahme 10 des Schwenkarms 1 eingesetzt ist. Damit ist der Magnet 2 unverdrehbar in der Aufnahme 10 des Schwenkarms 1 befestigt. Der Führungsmehrkant 8 ist hier als Nut ausgebildet. In einer anderen, nicht dargestellten Ausführungsform kann der Führungsmehrkant 8 auch ein rechteckiger Außenquerschnitt sein, der in eine rechteckig gestaltete Aufnahme 10 des Schwenkarms 1 eingesetzt ist.

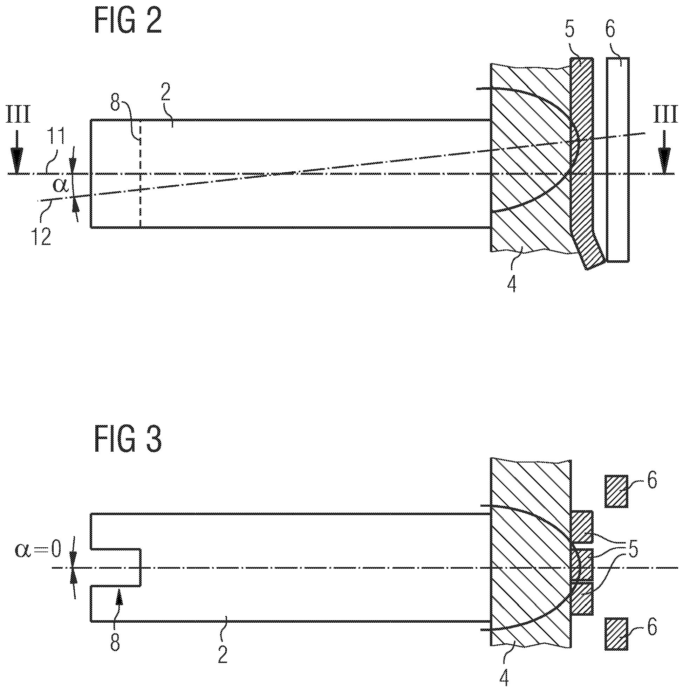

Figur 2 zeigt stark vergrößert den Magneten 2 mit angrenzenden Bereichen des Dickschichtnetzwerkes 4 und der Kontaktfederelemente 5, 6 aus Figur 1. Der Magnet 2 weist eine mechanische Achse 11 und eine um den Winkel α von der mechanischen Achse 11 abweichende magnetische Achse 12 auf. Der Winkel α ist fertigungsbedingt und lässt sich nur mit großem Aufwand bei der Nachbearbeitung des Magneten 2 verkleinern.

Figur 3 zeigt in einer Schnittdarstellung entlang der Linie III - III durch den Magneten 2 und die angrenzenden Bereiche des Dickschichtnetzwerkes 4 und der Kontaktfederelemente 5, 6 aus Figur 2, dass aus der dargestellten Ansicht die Abweichung der magnetischen Achse 12 von der mechanischen Achse 11 0° beträgt. Damit ist der Magnet 2 derart ausgerichtet, dass die mechanische Achse 11 und die magnetische Achse 12 in der in Figur 3 dargestellten Ansicht übereinanderliegen. Hierdurch weisen die magnetische Achse 12 und die mechanische Achse 11 jeweils auf dasselbe, an dem Dickschichtnetzwerk 4 anliegende Kontaktfederelement 5.

Zur Fertigung des Positions-Sensors aus Figur 1 wird zunächst der Magnet 2 um seine mechanische Achse 11 solange gedreht, bis die Abweichung der magnetischen Achse 12 von der mechanischen Achse 11 0° beträgt und anschließend der nutförmige Führungsmehrkant 8 in eine Stirnseite des Magneten 2 eingearbeitet wird. Beim Einstecken des Magneten 2 in die Aufnahme 10 des Schwenkarms 1 gelangt der Führungsmehrkant 8 in den Vorsprung 9. Der Magnet 2 ist damit in dem Positions-Sensor ausgerichtet.

## Patentansprüche

1. Magnetisch passiver Positions-Sensor mit einem an einem Schwenkarm (1) angeordneten Magneten (2), mit einer Vielzahl von im Schwenkbereich des Magneten (2) angeordneten Kontaktfederelementen (5, 6), mit einem Dichtschichtnetzwerk (4), wobei die Kontaktfederelemente (5, 6) dem Dickschichtnetzwerk (4) gegenüberstehen und von dem Magneten (2) gegen das Dickschichtnetzwerk (4) bewegbar sind, wobei der Magnet (2) um seine auf das Dickschichtnetzwerk (4) gerichtete mechanische Achse (11) unverdrehbar gehalten ist, **dadurch gekennzeichnet , dass** der Magnet (2) mit seiner magnetischen Achse (12) in eine vorgesehene Richtung ausgerichtet ist, derart, dass sowohl seine magnetische als auch seine mechanische Achse auf dasselbe Kontaktfederelement ausgerichtet sind, wobei der Magnet (2) einen Führungsmehrkant (8) aufweist, und dass eine Aufnahme (10) des Schwenkarms (1) für den Magneten (2) dem Führungsmehrkant (8) entsprechend gestaltet ist.

2. Verfahren zur Fertigung eines magnetisch passiven Positions-Sensors gemäß Anspruch 1, bei dem ein Magnet schwenkbar über einem Dickschichtnetzwerk gegenüberstehenden Kontaktfederelementen angeordnet wird, **dadurch gekennzeichnet, dass** eine magnetische Achse des Magneten bestimmt wird und dass der Magnet so in Richtung der Kontaktfederelemente ausgerichtet wird, dass sowohl seine magnetische als auch seine mechanische Achse auf dasselbe Kontaktfederelement ausgerichtet sind, wobei nach der Bestimmung der Ausrichtung der magnetischen Achse ein Führungsmehrkant in den Magneten eingearbeitet wird.

## Claims

1. Magnetically passive position sensor having a magnet (2) arranged on a pivoting arm (1), having a large number of contact spring elements (5, 6) arranged in the pivoting range of the magnet (2), and having a thick film mesh (4), the contact spring elements (5, 6) lying opposite the thick film mesh (4), and it being possible for the contact spring elements to be moved by the magnet (2) toward the thick film mesh (4), wherein the magnet (2) is held such that it cannot rotate about its mechanical axis (11), which points toward the thick film mesh (4), **characterized in that** the magnet (2) is aligned with its magnetic axis (12) pointing in an intended direction such that both its magnetic axis and its mechanical axis are aligned with the same contact spring element, wherein the magnet (2) has a guide polygon (8), and **in that** a holder (10) of the pivoting arm (1) for the magnet (2) is designed so as to correspond to the guide polygon (8).

2. Method for manufacturing a magnetically passive position sensor according to Claim 1, in which a magnet is arranged such that it can pivot over contact spring elements lying opposite a thick film mesh, **characterized in that** a magnetic axis of the magnet is determined, and **in that** the magnet is aligned in the direction of the contact spring elements such that both its magnetic axis and its mechanical axis are aligned with the same contact spring element, wherein a guide polygon is incorporated in the magnets once the alignment of the magnetic axis has been determined.

## Revendications

1. Capteur de position passif magnétique, comprenant un aimant (2) disposé sur un bras pivotant (1), comprenant une pluralité d'éléments à ressort de contact (5, 6) disposés dans la zone de pivotement de l'aimant (2), comprenant un réseau de couches épaisses (4), les éléments à ressort de contact (5, 6) se trouvant en vis-à-vis du réseau de couches épaisses (4) et pouvant être déplacés par l'aimant (2) contre le réseau de couches épaisses (4), l'aimant étant maintenu non rotatif autour de son axe mécanique (11) orienté sur le réseau de couches épaisses (4), **caractérisé en ce que** l'aimant (2) est orienté avec son axe magnétique (12) dans une direction prévue de telle sorte qu'à la fois son axe magnétique et son axe mécanique sont orientés sur le même élément à ressort de contact, l'aimant (2) possédant un polygone de guidage (8), et **en ce qu'**un logement (10) du bras pivotant (1) pour l'aimant (2) est configuré en correspondance du polygone de guidage (8).

2. Procédé de fabrication d'un capteur de position passif magnétique selon la revendication 1, selon lequel un aimant est disposé de manière pivotante sur un élément à ressort de contact en vis-à-vis d'un réseau de couches épaisses, **caractérisé en ce qu'**un axe magnétique de l'aimant est déterminé et **en ce que** l'aimant est orienté en direction des éléments à ressort de contact de telle sorte qu'à la fois son axe magnétique et son axe mécanique sont orientés sur le même élément à ressort de contact, un polygone de guidage étant incorporé dans l'aimant après la détermination de l'orientation de l'axe magnétique.
